# EUROPÄISCHE PATENTSCHRIFT

(11) **EP 3 164 290 B1**
(45) Veröffentlichungstag und Bekanntmachung des Hinweises auf die Patenterteilung: **28.03.2018**
(21) Anmeldenummer: 15730436.1
(22) Anmeldetag: 09.06.2015
(51) Int. Cl.: B60K 20/02

(54) **GANGWAHLSCHALTHEBELVORRICHTUNG UND GANGWAHLSCHALTHEBELANORDNUNG FÜR EIN FAHRZEUG SOWIE VERFAHREN ZUM BEFESTIGEN EINER GANGWAHLSCHALTHEBELVORRICHTUNG**
GEAR SELECTOR SHIFT LEVER DEVICE, GEAR SELECTOR SHIFT LEVER ARRANGEMENT FOR A VEHICLE, AND METHOD FOR SECURING A GEAR SELECTOR SHIFT LEVER DEVICE
DISPOSITIF DE LEVIER DE CHANGEMENT DE VITESSES ET AGENCEMENT DE LEVIER DE CHANGEMENT DE VITESSES POUR VÉHICULE ET PROCÉDÉ DE FIXATION D'UN DISPOSITIF DE LEVIER DE CHANGEMENT DE VITESSES

(30) Priorität: 02.07.2014 DE 102014212774
(43) Veröffentlichungstag der Anmeldung: 10.05.2017
(73) Patentinhaber: ZF Friedrichshafen AG, 88046 Friedrichshafen (DE)
(72) Erfinder: HESSEL, Alex, 49448 Lemförde (DE)
(86) Internationale Anmeldenummer: PCT/EP2015/062795
(87) Internationale Veröffentlichungsnummer: WO 2016/000917

(56) Entgegenhaltungen:
- DE-A1- 10 004 407
- DE-A1- 19 743 375
- DE-A1- 19 953 958
- DE-C1- 3 210 319
- US-A- 5 040 434
- US-A- 5 950 493

## Beschreibung

Die vorliegende Erfindung bezieht sich auf eine Gangwahlschalthebelvorrichtung für ein Fahrzeug, eine entsprechende Gangwahlschalthebelanordnung sowie ein Verfahren zum Befestigen einer Gangwahlschalthebelvorrichtung für ein Fahrzeug.

Ein Kraftfahrzeug weist eine Vielzahl von Komponenten auf, die in der Produktion montiert oder zu Service- und Wartungszwecken ausgetauscht werden müssen. Dabei kommen oft Schraubverbindungen zusammen mit weiteren Befestigungselementen zum Einsatz.

In der Offenlegungsschrift DE 199 53 958 A1 wird eine ortsfest in einem Kraftfahrzeug befestigte Schaltvorrichtung zur Betätigung eines Zahnräderwechselgetriebes vorgestellt, wobei die Verbindung zwischen dem Kraftfahrzeug und der Schaltvorrichtung eine Halterung aufweist.

Vor diesem Hintergrund schafft die vorliegende Erfindung eine verbesserte Gangwahlschalthebelvorrichtung für ein Fahrzeug, eine entsprechende Gangwahlschalthebelanordnung, die die Gangwahlschalthebelvorrichtung umfasst, sowie ein verbessertes Verfahren zum Befestigen einer Gangwahlschalthebelvorrichtung für ein Fahrzeug an einer Aufnahmeeinrichtung für die Gangwahlschalthebelvorrichtung gemäß den Hauptansprüchen. Vorteilhafte Ausgestaltungen ergeben sich aus den Unteransprüchen und der nachfolgenden Beschreibung.

Unter Verwendung einer Exzenterscheibe kann eine Gangwahlschalthebelanordnung für eine mechanische Betätigung eines Kraftfahrzeuggetriebes realisiert werden, die bei einfachem Aufbau kostengünstig und effizient montierbar ist.

Eine Exzenterscheibe kann als ein zuverlässiges und einfach verstellbares Befestigungsmittel für eine Gangwahlschalthebelvorrichtung eingesetzt werden, um eine kraftschlüssige und ergänzend oder alternativ formschlüssige Verbindung zwischen der Gangwahlschalthebelvorrichtung und einer Aufnahmeeinrichtung für die Gangwahlschalthebelvorrichtung zu schaffen. Gemäß unterschiedlicher Ausführungsformen kann die Verbindung beispielsweise direkt durch die Exzenterscheibe hergestellt werden oder unter Verwendung eines zusätzlichen Verbindungselements, das bei einer Rotationsbewegung der Exzenterscheibe translatorisch bewegt werden kann, um die Verbindung zwischen der Gangwahlschalthebelvorrichtung und der Aufnahmeeinrichtung für die Gangwahlschalthebelvorrichtung zu schaffen.

Eine Gangwahlschalthebelvorrichtung für ein Fahrzeug umfasst die folgenden Merkmale:
ein Gehäuse mit einer Deckseite, an der ein Schalthebel anordenbar oder angeordnet ist; und
eine mit dem Gehäuse verbundene Befestigungseinrichtung mit einer Welle und einer mit der Welle gekoppelten Exzenterscheibe, wobei ein Mittelpunkt der Exzenterscheibe außerhalb einer Wellenachse der Welle liegt, und wobei die Befestigungseinrichtung ausgebildet ist, die Gangwahlschalthebelvorrichtung mit einer mit dem Fahrzeug verbindbaren oder verbundenen Aufnahmeeinrichtung für die Gangwahlschalthebelvorrichtung zu verbinden, wenn die Exzenterscheibe um die Wellenachse bewegt wird.

Bei der Gangwahlschalthebelvorrichtung kann es sich um eine mechanische Gangwahlschalthebelvorrichtung handeln. Die Gangwahlschalthebelvorrichtung umfasst vorzugsweise einen Schalthebel, der Vergleichsweise einfach in einteiliger Form aufgebaut sein kann. Der Schalthebel kann unterseitig an einem Ende einer Schaltstange eines Kraftfahrzeuggetriebes angelenkt sein. Der Schalthebel kann einen durch einen Bediener betätigbaren Schaltknauf darstellen oder als Aufnahmeelement für einen solchen Schaltknauf dienen. Die Aufnahmeeinrichtung kann als ein Rahmen ausgebildet sein und in einem montierten Zustand die Gangwahlschalthebelvorrichtung weitestgehend umschließen. Dabei kann die Aufnahmeeinrichtung eine Form aufweisen, in die die Gangwahlschalthebelvorrichtung eingesetzt oder eingeschoben werden kann. Unter Verwendung der Befestigungseinrichtung kann eine kraftschlüssige und ergänzend oder alternativ formschlüssige Verbindung zwischen der Gangwahlschalthebelvorrichtung und der Aufnahmeeinrichtung geschaffen werden. Unter einer Exzenterscheibe kann ein Klemmexzenter verstanden werden. Unter einer Befestigungseinrichtung kann eine Schnellklemmeinrichtung verstanden werden. Unter der Aufnahmeeinrichtung kann ein Träger verstanden werden.

Die Befestigungseinrichtung kann einen mit der Welle gekoppelten Exzenter-Betätigungshebel aufweisen, der ausgebildet ist, bei einer Betätigung des Exzenter-Betätigungshebels die Exzenterscheibe um die Wellenachse zu bewegen. Vorteilhaft kann durch den Einsatz eines Exzenter-Betätigungshebels auf ein zusätzliches Werkzeug zur Montage verzichtet werden.

Der Exzenter-Betätigungshebel kann ausgebildet sein, um durch die Betätigung zwischen einer im Wesentlichen parallel zur Deckseite ausgerichteten Öffnungsstellung und einer im Wesentlichen quer zur Deckseite ausgerichteten Klemm-Schließstellung verschwenkbar zu sein. Dabei kann der Exzenter-Betätigungshebel manuell verschwenkbar sein. In der Klemm-Schließstellung kann der Exzenter-Betätigungshebel in eine im Wesentlichen entgegengesetzte Richtung zu dem Schalthebel ausgerichtet sein. So kann vorteilhaft eine Bewegung des Exzenter-Betätigungshebels um in etwa 90° diesen von der Öffnungsstellung in die Klemm-Schließstellung bringen, wobei der Exzenter-Betätigungshebel im geschlossenen Zustand, das heißt in der Klemm-Schließstellung, nicht störend und außerhalb der Reichweite eines Fahrers oder Bedieners des Fahrzeugs angeordnet sein kann.

Günstig ist es auch, wenn die Befestigungseinrichtung eine mit der Welle gekoppelte weitere Exzenterscheibe umfasst. Dabei kann ein Mittelpunkt der weiteren Exzenterscheibe außerhalb der Wellenachse der Welle liegen. Die Exzenterscheiben können an einander gegenüberliegenden Seiten des Gehäuses angeordnet sein. Die Exzenterscheiben können ausgebildet sein, um in Nuten der Aufnahmeeinrichtung einzugreifen. So kann die Gangwahlschalthebelvorrichtung an zwei Punkten mit der Aufnahmeeinrichtung verbunden werden. Um mehrere Klemmstellen an der Aufnahmeeinrichtung einrichten zu können, kann die Befestigungseinrichtung mehrere Exzenterscheiben aufweisen, die dann ihrerseits mit einem Zwischengestänge verbunden sein können. Der Exzenter-Betätigungshebel kann eine Funktion eines Zwischengestänges erfüllen.

Das Gehäuse kann auf einer an die Deckseite anschließenden Stirnseite einen Vorsprung aufweisen. Die Exzenterscheibe und eine mit der Exzenterscheibe gekoppelte erste Teilwelle der Welle können auf einer ersten Seite des Vorsprungs angeordnet sein. Die weitere Exzenterscheibe und eine mit der weiteren Exzenterscheibe gekoppelte zweite Teilwelle der Welle können auf einer der ersten Seite gegenüberliegenden zweiten Seite des Vorsprungs angeordnet sein. Der Exzenter-Betätigungshebel kann den Vorsprung umgreifen. Der Exzenter-Betätigungshebel kann mit der Exzenterscheibe über die erste Teilwelle gekoppelt sein. Der Exzenter-Betätigungshebel kann mit der weiteren Exzenterscheibe über die zweite Teilwelle gekoppelt sein. Die erste Teilwelle und die zweite Teilwelle können direkt miteinander gekoppelt sein. Die erste Teilwelle und die zweite Teilwelle können über ein Zwischengestänge miteinander gekoppelt sein. Dabei kann die Welle durch eine Durchführung in dem Vorsprung durchgeführt sein. Alternativ können die erste Teilwelle und die zweite Teilwelle indirekt oder nicht gekoppelt sein und die Welle durch den Vorsprung getrennt sein.

Die Befestigungseinrichtung kann zumindest einen Befestigungsstift aufweisen. Die Exzenterscheibe kann ausgebildet sein, den Befestigungsstift quer zur Wellenachse linear zu bewegen, um ein Ende des Befestigungsstiftes in eine Aussparung der Aufnahmeeinrichtung zu bewegen. Wenn der Befestigungsstift in die Aussparung bewegt wurde, kann die Gangwahlschalthebelvorrichtung mit der Aufnahmeeinrichtung verbunden sein. Die Aussparung kann als eine Bohrung oder ein Sackloch ausgebildet sein. Die Aussparung kann zur formschlüssigen Aufnahme des Endes des Befestigungsstiftes ausgebildet sein. Vorteilhaft kann der Befestigungsstift eine formschlüssige Verbindung der Gangwahlschalthebelvorrichtung beziehungsweise der Befestigungseinrichtung mit der Aufnahmeeinrichtung schaffen.

Ferner kann die Befestigungseinrichtung zumindest einen weiteren Befestigungsstift aufweisen. Dabei kann die Exzenterscheibe ausgebildet sein, den weiteren Befestigungsstift quer zur Wellenachse entgegengesetzt einer Bewegungsrichtung des Befestigungsstiftes linear zu bewegen, um ein Ende des weiteren Befestigungsstiftes in eine weitere Aussparung der Aufnahmeeinrichtung zu bewegen. Dadurch kann die Gangwahlschalthebelvorrichtung mit der Aufnahmeeinrichtung verbunden werden.

So kann die Befestigungseinrichtung ausgebildet sein, bei einer Rotationsbewegung der Exzenterscheibe die zwei Befestigungsstifte in zwei entgegengesetzte, von der Exzenterscheibe ausgehende Richtungen zu bewegen. So kann eine Rotationsbewegung der Exzenterscheibe in Translationsbewegungen des Befestigungsstifts und des weiteren Befestigungsstifts in zwei entgegengesetzte Richtungen transformiert werden.

Das Gehäuse kann zumindest ein Rastelement aufweisen, welches ausgebildet ist, in ein komplementäres Rastelement der Aufnahmeeinrichtung einzurasten, um die Aufnahmeeinrichtung mit der Gangwahlschalthebelvorrichtung formschlüssig in einer im Wesentlichen senkrechten Richtung zur Deckseite zu verbinden. Die Gangwahlschalthebelvorrichtung kann zumindest ein Rastelement aufweisen, welches ausgebildet ist, in ein komplementäres Rastelement der Aufnahmeeinrichtung einzurasten, um die Aufnahmeeinrichtung mit der Gangwahlschalthebelvorrichtung formschlüssig zu verbinden. Das Rastelement oder alternativ das komplementäre Rastelement können in Form eines Zapfens und ergänzend oder alternativ eines Vorsprungs ausgebildet sein. Das jeweils korrespondierende Rastelement kann als eine Aussparung, Nut oder Bohrung ausgebildet sein. Vorteilhaft kann so eine formschlüssige Verbindung in Richtung senkrecht zur Deckseite des Gehäuses geschaffen werden. Dabei kann das Gehäuse auch zumindest ein zweites Rastelement aufweisen. So kann das Gehäuse an zumindest zwei Punkten mit der Aufnahmeeinrichtung formschlüssig verbunden werden.

Das Rastelement und die Befestigungseinrichtung können auf zwei gegenüberliegenden Stirnseiten des Gehäuses angeordnet sein. So kann das Gehäuse auf einer Seite mittels des Rastelements gehalten werden und auf der gegenüberliegenden Seite mittels der Befestigungseinrichtung eine kraftschlüssige und ergänzend oder alternativ formschlüssige Verbindung zwischen dem Gehäuse und der Aufnahmeeinrichtung geschaffen werden. So kann das Gehäuse an zumindest drei Punkten, vorzugsweise an zumindest vier Punkten mit der Aufnahmeeinrichtung verbunden sein. Wenn die Deckseite im Wesentlichen rechteckig ausgebildet ist, kann das Gehäuse beziehungsweise die Gangwahlschalthebelvorrichtung im Bereich der vier Ecken der Deckseite mit der Aufnahmeeinrichtung verbunden sein.

Eine Gangwahlschalthebelanordnung für ein Fahrzeug umfasst eine Variante einer hier vorgestellten Gangwahlschalthebelvorrichtung und eine entsprechende Aufnahmeeinrichtung, wobei der Gangwahlschalthebelvorrichtung mittels der Befestigungseinrichtung mit der Aufnahmeeinrichtung verbindbar oder verbunden ist.

Ein Verfahren zum Befestigen einer Gangwahlschalthebelvorrichtung für ein Fahrzeug an einer Aufnahmeeinrichtung für die Gangwahlschalthebelvorrichtung umfasst die folgenden Schritte:
Bereitstellen einer Variante der hier vorgestellten Gangwahlschalthebelvorrichtung und Bereitstellen einer Variante der hier vorgestellten Aufnahmeeinrichtung; und
Bewegen der Exzenterscheibe der Gangwahlschalthebelvorrichtung um die Wellenachse, um die Gangwahlschalthebelvorrichtung an der Aufnahmeeinrichtung zu befestigen.

Im Schritt des Bewegens kann die Gangwahlschalthebelvorrichtung kraftschlüssig und ergänzend oder alternativ formschlüssig mit der Aufnahmeeinrichtung verbunden werden. Dadurch kann eine sichere Verbindung zwischen der Gangwahlschalthebelvorrichtung und der Aufnahmeeinrichtung geschaffen werden.

Auch durch diese Ausführungsvariante der Erfindung in Form eines Verfahrens zum Befestigen der Gangwahlschalthebelvorrichtung an der Aufnahmeeinrichtung kann die der Erfindung zugrunde liegende Aufgabe schnell und effizient gelöst werden.

Die Erfindung wird anhand der beigefügten Zeichnungen beispielhaft näher erläutert. Es zeigen:
- Fig. 1: eine schematische, perspektivische Darstellung einer Gangwahlschalthebelanordnung für ein Fahrzeug gemäß einem Ausführungsbeispiel der vorliegenden Erfindung;
- Fig. 2: eine schematische Darstellung einer Gangwahlschalthebelanordnung in einem gelösten Zustand gemäß einem Ausführungsbeispiel der vorliegenden Erfindung;
- Fig. 3 bis Fig. 5: eine perspektivische Darstellung einer Gangwahlschalthebelvorrichtung und einer Aufnahmeeinrichtung gemäß einem Ausführungsbeispiel der vorliegenden Erfindung;
- Fig. 6: eine vereinfachte Seitenansicht einer Gangwahlschalthebelvorrichtung gemäß einem Ausführungsbeispiel der vorliegenden Erfindung;
- Fig. 7: eine Seitenansicht einer Gangwahlschalthebelvorrichtung gemäß einem Ausführungsbeispiel der vorliegenden Erfindung;
- Fig. 8: eine schematische 3D-Ansicht einer mit einer Aufnahmeeinrichtung verbindbaren Gangwahlschalthebelvorrichtung gemäß einem Ausführungsbeispiel der vorliegenden Erfindung;
- Fig. 9: eine schematische 3D-Ansicht einer mit einer Aufnahmeeinrichtung verbundenen Gangwahlschalthebelvorrichtung gemäß einem Ausführungsbeispiel der vorliegenden Erfindung; und
- Fig. 10: ein Ablaufdiagramm eines Verfahrens um Befestigen einer Gangwahlschalthebelvorrichtung für ein Fahrzeug an einer Aufnahmeeinrichtung für die Gangwahlschalthebelvorrichtung gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

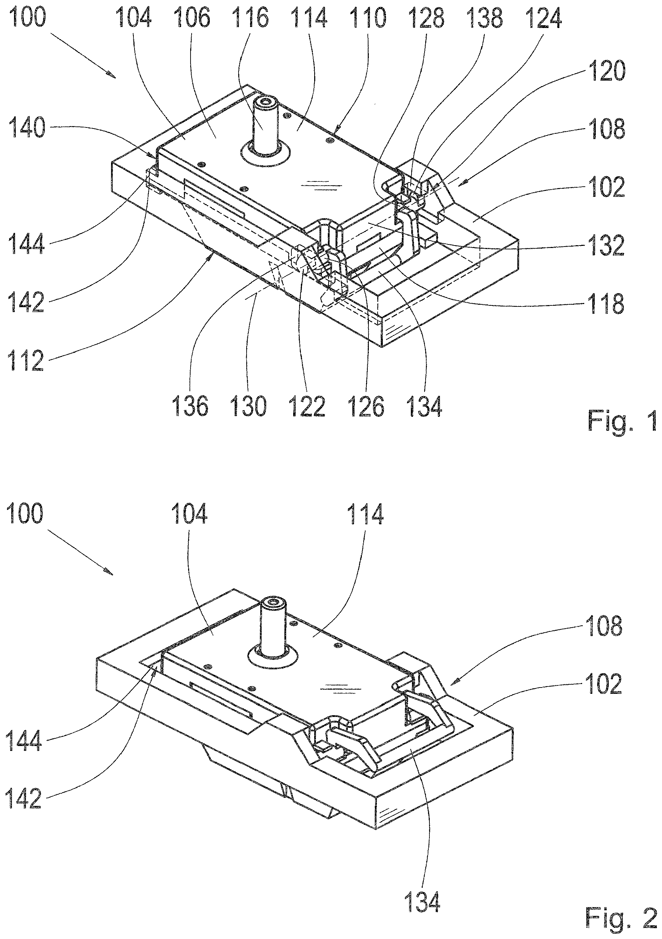

Fig. 1 zeigt eine schematische perspektivische Darstellung einer Gangwahlschalthebelanordnung 100 für ein Fahrzeug gemäß einem Ausführungsbeispiel der vorliegenden Erfindung. Die Gangwahlschalthebelanordnung 100 umfasst eine Aufnahmeeinrichtung 102 und eine Gangwahlschalthebelvorrichtung 104 mit einem Gehäuse 106 und einer mit dem Gehäuse verbundenen Befestigungseinrichtung 108. Das Gehäuse 106 weist gemäß diesem Ausführungsbeispiel beispielhaft eine obere Gehäuseschale 110 sowie eine untere Gehäuseschale 112 auf. Auf einer Deckseite 114 des Gehäuses 106 ist ein Schalthebel 116 oder eine Aufnahmeeinrichtung für den Schalthebel 116 angeordnet. Das Gehäuse 106 weist eine im Wesentlichen quaderförmige Grundform auf. Die obere Gehäuseschale 110 umfasst die Deckseite 114. An einer an die Deckseite 114 anschließenden ersten Stirnseite 118 der Gangwahlschalthebelvorrichtung 104 ist die Befestigungseinrichtung 108 angeordnet.

Die Befestigungseinrichtung 108 umfasst auf einer Welle 120 eine erste Exzenterscheibe 122 sowie eine zweite Exzenterscheibe 124. Dabei ist die erste Exzenterscheibe 122 mit einer ersten Teilwelle 126 der Welle 120 gekoppelt. Die zweite Exzenterscheibe 124 ist mit einer zweiten Teilwelle 128 der Welle 120 gekoppelt. Ein Mittelpunkt der ersten Exzenterscheibe 122 sowie ein Mittelpunkt der zweiten Exzenterscheibe 124 liegen außerhalb einer Wellenachse 130 der Welle 120. Das Gehäuse 106 weist auf der ersten Stirnseite 118 einen Vorsprung 132 auf. Die mit der ersten Exzenterscheibe 122 gekoppelte erste Teilwelle 126 ist auf einer ersten Seite des Vorsprungs 132 angeordnet. Die mit der zweiten Exzenterscheibe 124 gekoppelte zweite Teilwelle 128 ist auf einer zweiten Seite des Vorsprungs 132 angeordnet. Weiterhin weist die Befestigungseinrichtung 108 einen Exzenter-Betätigungshebel 134 auf. Der Exzenter-Betätigungshebel 134 ist mit der ersten Teilwelle 126 sowie der zweiten Teilwelle 128 gekoppelt.

In dem in Fig. 1 gezeigten Ausführungsbeispiel umfasst der Exzenter-Betätigungshebel 134 einen ersten Hebelarm, der mit der ersten Teilwelle 126 gekoppelt ist, einen zweiten Hebelarm, der mit der zweiten Teilwelle 128 gekoppelt ist, sowie ein Verbindungsstück, welches den ersten Hebelarm mit dem zweiten Hebelarm des Exzenter-Betätigungshebels 134 verbindet. Der Exzenter-Betätigungshebel 134 umgreift den Vorsprung 132 des Gehäuses 106. Der erste Hebelarm, der zweite Hebelarm sowie das Verbindungsstück schaffen eine Form eines Zwischengestänges zwischen der ersten Teilwelle 126 und der zweiten Teilwelle 128.

Der Exzenter-Betätigungshebel 134 ist ausgebildet, bei einer Betätigung des Exzenter-Betätigungshebels 134 die Exzenterscheiben 122, 124 um die Wellenachse 130 zu bewegen. Der Exzenter-Betätigungshebel 134 ist ausgebildet, die Exzenterscheiben 122, 124 um die Welle 120 zumindest teilweise zu rotieren. Dabei kann der Exzenter-Betätigungshebel 134 durch eine Betätigung zwischen einer im Wesentlichen parallel zur Deckseite 114 ausgerichteten Öffnungsstellung und einer im Wesentlichen quer zur Deckseite ausgerichteten Klemm-Schließstellung manuell verschwenkt werden. In Fig. 1 ist der Exzenter-Betätigungshebel 134 in der Klemm-Schließstellung dargestellt. Die mögliche Rotation des Exzenter-Betätigungshebels 134 beschreibt zwischen der Öffnungsstellung und der Klemm-Schließstellung einen Viertelkreis oder mit anderen Worten einen Winkel von 90°, gegebenenfalls zuzüglich eines Toleranzbereichs. In einem Ausführungsbeispiel beträgt der Toleranzbereich beispielsweise ±10°, ±20° oder ±30°.

Die Exzenterscheiben 122, 124 sind, wie bereits beschrieben, auf zwei an einander gegenüberliegenden Seiten des Gehäuses 106 angeordnet. Die Exzenterscheiben 122, 124 sind weiterhin ausgebildet, in zwei Nuten 136, 138 der Aufnahmeeinrichtung 102 einzugreifen.

Auf einer der Befestigungseinrichtung 108 gegenüberliegenden zweiten Stirnseite 140 der Gangwahlschalthebelvorrichtung 104 ist zumindest ein Rastelement 142 angeordnet. Mit anderen Worten ist die zweite Stirnseite 140 ausgeformt, um ein Rastelement 142 zu bilden. Die zweite Stirnseite 140 ist auf einer der ersten Stirnseite 118 gegenüberliegenden zweiten Stirnseite 144 des Gehäuses 106 angeordnet und ist somit an einer Kante mit der Deckseite 114 verbunden. Das Rastelement 142 ist bei dem vorliegenden Ausführungsbeispiel als ein Zapfen 142 oder ein Vorsprung 142 ausgebildet. Die Aufnahmeeinrichtung 102 weist ein zu dem Rastelement 142 komplementäres Rastelement 144 auf. Das Rastelement 142 ist ausgebildet, in das komplementäre Rastelement 144 der Aufnahmeeinrichtung 102 einzurasten, um die Aufnahmeeinrichtung 102 mit der Gangwahlschalthebelvorrichtung 104 formschlüssig zu verbinden. Dabei wird eine Bewegung im Wesentlichen senkrecht zur Erstreckungsebene der Deckseite 114 verhindert. Somit sind das zumindest eine Rastelement 142 und die Befestigungseinrichtung 108 auf zwei sich gegenüberliegenden Stirnseiten 118, 140 angeordnet.

In einem nicht gezeigten Ausführungsbeispiel ist das an der Aufnahmeeinrichtung 102 angeordnete komplementäre Rastelement 144 als ein Zapfen 144 oder ein Vorsprung 144 ausgebildet. In diesem Fall ist das an der zweiten Stirnseite 140 der Gangwahlschalthebelvorrichtung 104 angeordnete Rastelement 142 ausgebildet, das komplementäre Rastelement 144 aufzunehmen oder in dieses einzurasten.

Die Aufnahmeeinrichtung 102 ist als ein Rahmen ausgeformt. An einer ersten Innenseite der Aufnahmeeinrichtung 102 ist das komplementäre Rastelement 144 ausgeformt. An zwei daran anschließenden Innenseiten der Aufnahmeeinrichtung 102 ist je eine Nut 136, 138 zur Aufnahme der korrespondierenden Exzenterscheibe 122, 124 ausgebildet. Eine vierte Rahmeninnenseite, die die beiden letztgenannten Innenseiten verbindet, weist neben der Funktion eines Verbindungselements keine weitere Funktionalität auf.

In dem in Fig. 1 gezeigten Ausführungsbeispiel weist die Exzenterscheibe 122 eine eiförmige Form auf. In nicht gezeigten Ausführungsbeispielen ist die Kontur der Exzenterscheibe 122 kreisförmig oder oval ausgebildet.

Fig. 2 zeigt eine schematische Darstellung einer Gangwahlschalthebelanordnung 100 in einem gelösten Zustand gemäß einem Ausführungsbeispiel der vorliegenden Erfindung. Bei der Gangwahlschalthebelanordnung 100 kann es sich um ein Ausführungsbeispiel der in Fig. 1 gezeigten Gangwahlschalthebelanordnung 100 handeln. Die die Gangwahlschalthebelanordnung 100 umfasst eine Aufnahmeeinrichtung 102 sowie eine Gangwahlschalthebelvorrichtung 104. Die Aufnahmeeinrichtung 102 stellt einen Rahmen dar, in dem die Gangwahlschalthebelvorrichtung 104 angeordnet und mit der Aufnahmeeinrichtung 102 verbunden werden kann. Ein Exzenter-Betätigungshebel 134 einer Befestigungseinrichtung 108 der Gangwahlschalthebelvorrichtung 104 befindet sich in einer Öffnungsstellung. So ist der Exzenter-Betätigungshebel 134 im Wesentlichen parallel zu einer Deckseite 114 der Gangwahlschalthebelvorrichtung 104 ausgerichtet. Insbesondere sind Hebelarme des Exzenter-Betätigungshebels 134 im Wesentlichen parallel zu der Deckseite 114 der Gangwahlschalthebelvorrichtung 104 ausgerichtet. Die Gangwahlschalthebelvorrichtung 104 weist an einer Stirnseite ein Rastelement 142 auf, welches ausgebildet ist, in ein zu dem Rastelement 142 komplementären Rastelement 144 einzurasten und eine formschlüssige Verbindung zwischen der Gangwahlschalthebelvorrichtung 104 und der Aufnahmeeinrichtung 102 zu schaffen. Die Befestigungseinrichtung 108 ist auf einer zu der Stirnseite mit dem Rastelement 142 gegenüberliegenden Stirnseite der Gangwahlschalthebelvorrichtung 104 angeordnet.

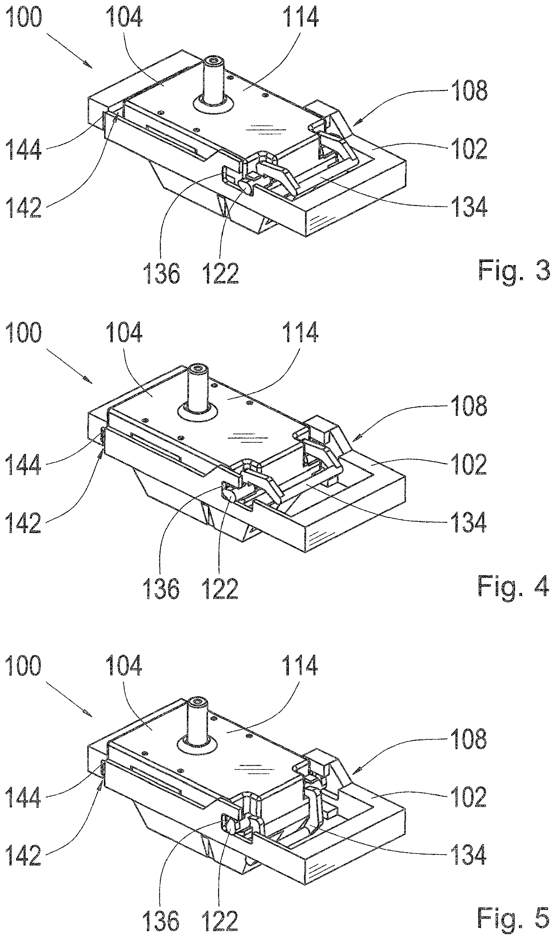

Die folgenden drei Figuren Fig. 3 bis Fig. 5 zeigen eine Gangwahlschalthebelanordnung 100 gemäß einem Ausführungsbeispiel der vorliegenden Erfindung. So zeigen Fig. 3 bis Fig. 5 eine perspektivische Darstellung einer Gangwahlschalthebelvorrichtung 104 und einer Aufnahmeeinrichtung 102 gemäß einem Ausführungsbeispiel der vorliegenden Erfindung, wobei die drei Darstellungen sich in Bezug auf die Position beziehungsweise die Verbindung der Gangwahlschalthebelvorrichtung 104 oder einer Befestigungseinrichtung 108 in Bezug auf die Aufnahmeeinrichtung 102 unterscheiden. In Fig. 3 ist die Gangwahlschalthebelvorrichtung 104 lose in die Aufnahmeeinrichtung 102 eingesetzt. Ein Exzenter-Betätigungshebel 134 der Befestigungseinrichtung 108 der Gangwahlschalthebelvorrichtung 104 befindet sich in einer Öffnungsstellung, das heißt im Wesentlichen parallel zu einer Deckseite 114 der Gangwahlschalthebelvorrichtung 104. In Fig. 4 ist die Gangwahlschalthebelvorrichtung 104 im Unterschied zu der Darstellung in Fig. 3 in Richtung einer an die Deckseite 114 anschließenden Stirnseite, auf der ein Rastelement 142 ausgebildet ist, in Bezug auf die Aufnahmeeinrichtung 102 derart verschoben, dass das Rastelement 142 mit einem in der Aufnahmeeinrichtung 102 ausgebildetem komplementären Rastelement 144 eine formschlüssige Verbindung - formschlüssig in Richtung quer zur Deckseite 114 - schafft. Der Exzenter-Betätigungshebel 134 befindet sich in Fig. 4 im Vergleich zu Fig. 3 unverändert in der Öffnungsstellung. In Fig. 5 befindet sich im Unterschied zu Fig. 4 der Exzenter-Betätigungshebel 134 in einer Verriegelungsposition, das heißt, dass der Exzenter-Betätigungshebel 134 in Bezug auf Fig. 4 in eine im Wesentlichen quer zur Deckseite 114 ausgerichtete Klemm-Schließstellung manuell verschwenkt wurde.

Fig. 3 zeigt eine perspektivische Darstellung einer Gangwahlschalthebelvorrichtung 104 und einer Aufnahmeeinrichtung 102 gemäß einem Ausführungsbeispiel der vorliegenden Erfindung. Bei der Gangwahlschalthebelvorrichtung 104 und der Aufnahmeeinrichtung 102 kann es sich um ein Ausführungsbeispiel entsprechend der in Fig. 1 oder Fig. 2 gezeigten Gangwahlschalthebelanordnung 100 mit einer Gangwahlschalthebelvorrichtung 104 und einer Aufnahmeeinrichtung 102 handeln. Die Darstellung entspricht weitgehend der Darstellung in Fig. 2, mit dem Unterschied, dass ein Rahmen der Aufnahmeeinrichtung 102 auf der dem Betrachter zugewandten Seite dünner dargestellt ist, um die Nut 136 für die Exzenterscheibe 122 sichtbar zu machen.

Fig. 4 zeigt eine perspektivische Darstellung einer mit einer Aufnahmeeinrichtung 102 verbindbaren Gangwahlschalthebelvorrichtung 104 gemäß einem Ausführungsbeispiel der vorliegenden Erfindung. Bei der Aufnahmeeinrichtung 102 und der Gangwahlschalthebelvorrichtung 104 kann es sich um ein Ausführungsbeispiel von einer in den vorangegangenen Figuren gezeigten Aufnahmeeinrichtung 102 beziehungsweise von einer in den vorangegangenen Figuren gezeigten Gangwahlschalthebelvorrichtung 104 handeln. Die Darstellung in Fig. 4 entspricht weitgehend der Darstellung in Fig. 3, mit dem Unterschied, dass die erste Exzenterscheibe 122 durch eine translatorische Bewegung der Gangwahlschalthebelvorrichtung 104 in Richtung des Rastelements 142 in der ersten Nut 136 angeordnet ist. Der Exzenter-Betätigungshebel 134 befindet sich weiter in einer Öffnungsstellung. Das in Fig. 4 nicht sichtbare Rastelement 142 der Gangwahlschalthebelvorrichtung 104 schafft mit einem ebenfalls nicht dargestellten komplementären Rastelement 144 der Aufnahmeeinrichtung 102 eine formschlüssige Verbindung zwischen der Aufnahmeeinrichtung 102 und der Gangwahlschalthebelvorrichtung 104.

Fig. 5 zeigt eine perspektivische Darstellung einer mit einer Aufnahmeeinrichtung 102 verbundenen Gangwahlschalthebelvorrichtung 104 gemäß einem Ausführungsbeispiel der vorliegenden Erfindung. Bei der Aufnahmeeinrichtung 102 und der Gangwahlschalthebelvorrichtung 104 kann es sich um ein Ausführungsbeispiel von einer in den vorangegangenen Figuren gezeigten Aufnahmeeinrichtung 102 beziehungsweise von einer in den vorangegangenen Figuren gezeigten Gangwahlschalthebelvorrichtung 104 handeln. Die Darstellung in Fig. 5 entspricht weitgehend der Darstellung in Fig. 4, mit dem Unterschied, dass der Exzenter-Betätigungshebel 134 in einer Klemm-Schließstellung ausgerichtet ist. Die Exzenterscheiben 142, 124 sind im Vergleich zur Darstellung in Fig. 4 ungefähr um einen Viertelkreis - in der Darstellung im Uhrzeigersinn - gedreht und schaffen mit den Nuten 136, 138 jeweils eine kraftschlüssige Verbindung.

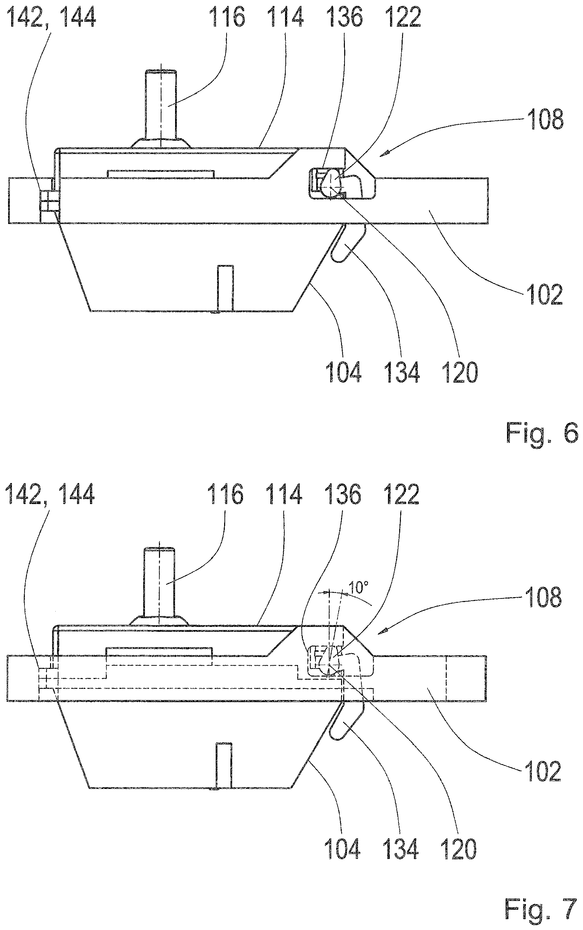

Fig. 6 zeigt eine vereinfachte Seitenansicht einer Gangwahlschalthebelvorrichtung 104 gemäß einem Ausführungsbeispiel der vorliegenden Erfindung. Bei der Gangwahlschalthebelvorrichtung 104 kann es sich um ein Ausführungsbeispiel einer in den vorangegangenen Figuren gezeigten Gangwahlschalthebelvorrichtung 104 handeln. Die Darstellung in Fig. 6 entspricht weitgehend der Darstellung in Fig. 3 bis Fig. 5, mit dem Unterschied, dass die Gangwahlschalthebelvorrichtung 104 in einer Seitenansicht dargestellt ist, wobei die Darstellung in Fig. 6 im Bereich der Rastelemente 142, 144 quasi eine Schnittbilddarstellung präsentiert.

Senkrecht auf der Deckseite 114 der Gangwahlschalthebelvorrichtung 104 ist eine Aufnahmeeinrichtung 116 für einen Schalthebel angeordnet. An einer ersten Stirnseite 118, die an die Deckseite 114 anschließt, ist eine Befestigungseinrichtung 108 angeordnet. Die Befestigungseinrichtung 108 umfasst eine erste Exzenterscheibe 122, die mit einer Welle 120 gekoppelt ist, wobei ein Mittelpunkt der Exzenterscheibe 122 außerhalb einer Wellenachse der Welle 120 liegt. Dabei kann unter der Wellenachse der Welle 120 eine Rotationsachse der Welle 120 verstanden werden. Ein Exzenter-Betätigungshebel 134 ist mit der Welle 120 und somit der Exzenterscheibe 122 gekoppelt. Die Exzenterscheibe 122 ist in einer Nut 136 der Aufnahmeeinrichtung 102 angeordnet.

Fig. 7 zeigt eine Seitenansicht einer Gangwahlschalthebelvorrichtung gemäß einem Ausführungsbeispiel der vorliegenden Erfindung. Bei der Gangwahlschalthebelvorrichtung 104 kann es sich um ein Ausführungsbeispiel von einer in den vorangegangenen Figuren gezeigten Gangwahlschalthebelvorrichtung 104 handeln. Die Darstellung in Fig. 7 entspricht weitgehend der Darstellung in Fig. 6, mit dem Unterschied, dass die obere Gehäuseschale 110 und die untere Gehäuseschale 112 des Gehäuses 106 der Gangwahlschalthebelvorrichtung 104 zu erkennen ist, da für die Aufnahmeeinrichtung 102 eine quasi transparente Darstellung gewählt wurde, beziehungsweise eine Schnittdarstellung gewählt wurde. Das Rastelement 142 wird sowohl von der oberen Gehäuseschale 110 als auch der unteren Gehäuseschale 112 gebildet. Die Befestigungseinrichtung 108 ist im Wesentlichen an der oberen Gehäuseschale 110 angeordnet. Bei der Deckseite 114 handelt es sich in dem gezeigten Ausführungsbeispiel um eine im Wesentlichen ebene Fläche.

Eine durch den Mittelpunkt der Exzenterscheibe 122 und eine Rotationsachse der Welle 120 verlaufende Gerade 746 weist einen Winkel von 10° in Bezug zu einer Geraden auf, die senkrecht zur Deckseite 116 oder parallel zur Aufnahmeeinrichtung 116 ausgerichtet ist. Somit wurde die Exzenterscheibe 122 um 10° über eine maximale Klemmstellung der Exzenterscheibe 122 hinaus bewegt. Dadurch kann eine Sicherung gegen ein ungewolltes Öffnen der Befestigungseinrichtung 108 erzielt werden.

In einem nicht gezeigten Ausführungsbeispiel wird die Befestigungseinrichtung in der Klemm-Schließstellung mittels eines Schutzbügels oder eines Schutzbolzens gegen ein ungewolltes Öffnen gesichert.

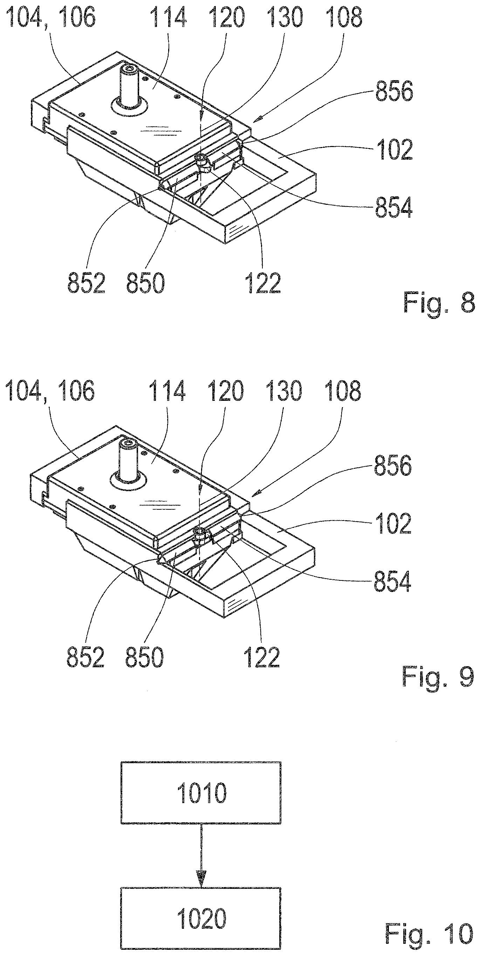

Fig. 8 zeigt eine schematische 3D-Ansicht einer mit einer Aufnahmeeinrichtung 102 verbindbaren Gangwahlschalthebelvorrichtung 104 gemäß einem Ausführungsbeispiel der vorliegenden Erfindung. Bei der Gangwahlschalthebelvorrichtung 104 und der Aufnahmeeinrichtung 102 für die Gangwahlschalthebelvorrichtung 104 kann es sich um ein Ausführungsbeispiel einer in den vorangegangenen Figuren gezeigten und beschriebenen Gangwahlschalthebelvorrichtung 104 beziehungsweise Aufnahmeeinrichtung 102 handeln. Die Gangwahlschalthebelvorrichtung 104 umfasst ein Gehäuse 106 mit einer Deckseite 114, an der ein Schalthebel anordenbar ist. Weiterhin umfasst die Gangwahlschalthebelvorrichtung 104 eine mit dem Gehäuse 106 verbundene Befestigungseinrichtung 108, die ausgebildet ist, die Gangwahlschalthebelvorrichtung 104 mit der Aufnahmeeinrichtung 102 zu verbinden. Die Befestigungseinrichtung 108 umfasst eine Welle 120 und zumindest eine mit der Welle 120 gekoppelte Exzenterscheibe 122. Dabei liegt ein Mittelpunkt der Exzenterscheibe 122 außerhalb einer Rotationsachse der Welle 120. Die Rotationsachse der Welle 120 wird als Wellenachse 130 bezeichnet. Die Wellenachse 130 ist im Wesentlichen quer zur Deckseite 114 ausgerichtet. Weiterhin umfasst die Befestigungseinrichtung 108 einen Befestigungsstift 850. Die Exzenterscheibe 122 ist ausgebildet den Befestigungsstift 850 quer zur Wellenachse 130 linear zu bewegen, um ein von der Exzenterscheibe 122 abgewandtes Ende des Befestigungsstiftes 850 in eine Aussparung 852 der Aufnahmeeinrichtung 102 zu bewegen. Dadurch wird die Gangwahlschalthebelvorrichtung 104 mit der Aufnahmeeinrichtung 102 verbunden.

In dem in Fig. 8 gezeigten Ausführungsbeispiel umfasst die Befestigungseinrichtung 108 zumindest einen weiteren Befestigungsstift 854 der ausgebildet ist, von der Exzenterscheibe quer zur Wellenachse 130 entgegengesetzt zur Bewegungsrichtung des Befestigungsstiftes 850 linear bewegt zu werden, um ein von der Wellenachse 130 abgewandtes Ende des weiteren Befestigungsstiftes 854 in eine weitere Aussparung 856 der Aufnahmeeinrichtung 102 zu bewegen, um die Gangwahlschalthebelvorrichtung 104 mit der Aufnahmeeinrichtung 102 zu verbinden.

In einem optionalen Ausführungsbeispiel weist die Gangwahlschalthebelvorrichtung 104 zumindest ein Rastelement auf, welches ausgebildet ist, in ein komplementäres Rastelement der Aufnahmeeinrichtung 102 einzurasten. Das Rastelement schafft zusammen mit dem komplementären Rastelement eine formschlüssige Verbindung zwischen der Gangwahlschalthebelvorrichtung 104 und der Aufnahmeeinrichtung 102.

In dem in Fig. 8 gezeigten Ausführungsbeispiel sind das Rastelement und die Befestigungseinrichtung 108 auf zwei gegenüberliegenden Stirnseiten der Gangwahlschalthebelvorrichtung 104 angeordnet.

Fig. 9 zeigt eine schematische 3D-Ansicht einer mit einer Aufnahmeeinrichtung verbundenen Gangwahlschalthebelvorrichtung gemäß einem Ausführungsbeispiel der vorliegenden Erfindung. Bei der Gangwahlschalthebelvorrichtung 104 und der Aufnahmeeinrichtung 102 für die Gangwahlschalthebelvorrichtung 104 kann es sich um ein Ausführungsbeispiel einer in den vorangegangenen Figuren gezeigten und beschriebenen Gangwahlschalthebelvorrichtung 104 beziehungsweise Aufnahmeeinrichtung 102 handeln. Die Darstellung entspricht weitgehend der Darstellung in Fig. 8, mit dem Unterschied, dass das der erste Befestigungsstift 850 und der zweite Befestigungsstift 854 in die entsprechenden Aussparungen 852, 856 einrastet und eine formschlüssige Verbindung zwischen der Gangwahlschalthebelvorrichtung 104 und der Aufnahmeeinrichtung 102 schafft. Zusätzlich zeigen Pfeile eine Drehrichtung der Exzenterscheibe 122 zum Verbinden von der Gangwahlschalthebelvorrichtung 104 und der Aufnahmeeinrichtung 102 und eine daraus resultierende Bewegungsrichtung des ersten Befestigungsstifts 850 und des zweiten Befestigungsstifts 854.

Fig. 10 zeigt ein Ablaufdiagramm eines Verfahrens um Befestigen einer Gangwahlschalthebelvorrichtung für ein Fahrzeug an einer Aufnahmeeinrichtung für die Gangwahlschalthebelvorrichtung gemäß einem Ausführungsbeispiel der vorliegenden Erfindung. Bei der Gangwahlschalthebelvorrichtung und der Aufnahmeeinrichtung kann es sich um ein Ausführungsbeispiel einer in den vorangegangenen Figuren gezeigten und beschriebenen Gangwahlschalthebelvorrichtung 104 beziehungsweise Aufnahmeeinrichtung 102 handeln. Das Verfahren zum Befestigen einer Gangwahlschalthebelvorrichtung für ein Fahrzeug an einer Aufnahmeeinrichtung für die Gangwahlschalthebelvorrichtung umfasst einen Schritt 1010 des Bereitstellens einer Variante einer in den vorangegangenen Figuren beschriebenen Gangwahlschalthebelvorrichtung und Bereitstellens der Aufnahmeeinrichtung sowie einen Schritt 1020 des Bewegens der Exzenterscheibe der Gangwahlschalthebelvorrichtung um die Wellenachse, um die Gangwahlschalthebelvorrichtung an der Aufnahmeeinrichtung zu befestigen.
In einem Ausführungsbeispiel wird im Schritt 1020 des Bewegens die Gangwahlschalthebelvorrichtung kraftschlüssig und ergänzend oder alternativ formschlüssig mit der Aufnahmeeinrichtung verbunden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Gangwahlschalthebelanordnung
- 102: Aufnahmeeinrichtung
- 104: Gangwahlschalthebelvorrichtung
- 106: Gehäuse
- 108: Befestigungseinrichtung
- 110: obere Gehäuseschale
- 112: untere Gehäuseschale
- 114: Deckseite
- 116: Schalthebel
- 118: erste Stirnseite
- 120: Welle
- 122: erste Exzenterscheibe
- 124: zweite Exzenterscheibe
- 126: erste Teilwelle
- 128: zweite Teilwelle
- 130: Wellenachse
- 132: Vorsprung
- 134: Exzenter-Betätigungshebel
- 136: erste Nut
- 138: zweite Nut
- 140: zweite Stirnseite
- 142: Rastelement
- 144: komplementäres Rastelement
- 746: Gerade
- 850: Befestigungsstift
- 852: Aussparung
- 854: weiteren Befestigungsstift
- 856: weitere Aussparung

- 1010: Schritt des Bereitstellens
- 1020: Schritt des Bewegens

## Patentansprüche

1. Gangwahlschalthebelvorrichtung (104) für ein Fahrzeug, die Gangwahlschalthebelvorrichtung (104) die folgenden Merkmale aufweist:
ein Gehäuse (106) mit einer Deckseite (114), an der ein Schalthebel (116) anordenbar oder angeordnet ist; **gekennzeichnet durch** eine mit dem Gehäuse (106) verbundene Befestigungseinrichtung (108) mit einer Welle (120) und einer mit der Welle (120) gekoppelten Exzenterscheibe (122), wobei ein Mittelpunkt der Exzenterscheibe (122) außerhalb einer Wellenachse (130) der Welle (120) liegt, und wobei die Befestigungseinrichtung (108) ausgebildet ist, die Gangwahlschalthebelvorrichtung (104) mit einer mit dem Fahrzeug verbindbaren oder verbundenen Aufnahmeeinrichtung (102) für die Gangwahlschalthebelvorrichtung (104) zu verbinden, wenn die Exzenterscheibe (122) um die Wellenachse (130) bewegt wird.

2. Gangwahlschalthebelvorrichtung (104) gemäß Anspruch 1, **dadurch gekennzeichnet, dass** die Befestigungseinrichtung (108) einen mit der Welle (120) gekoppelten Exzenter-Betätigungshebel (134) aufweist, der ausgebildet ist, bei einer Betätigung des Exzenter-Betätigungshebels (134) die Exzenterscheibe (122) um die Wellenachse (130) zu bewegen.

3. Gangwahlschalthebelvorrichtung (104) gemäß Anspruch 2, **dadurch gekennzeichnet, dass** der Exzenter-Betätigungshebel (134) ausgebildet ist, um durch die Betätigung zwischen einer im Wesentlichen parallel zur Deckseite (114) ausgerichteten Öffnungsstellung und einer im Wesentlichen quer zur Deckseite (114) ausgerichteten Klemm-Schließstellung verschwenkbar zu sein.

4. Gangwahlschalthebelvorrichtung (104) gemäß einem der vorangegangenen Ansprüche, **dadurch gekennzeichnet, dass** die Befestigungseinrichtung (108) eine mit der Welle (120) gekoppelte weitere Exzenterscheibe (124) umfasst, wobei ein Mittelpunkt der weiteren Exzenterscheibe (124) außerhalb der Wellenachse (130) der Welle (120) liegt, und wobei die Exzenterscheiben (122, 124) an einander gegenüberliegenden Seiten des Gehäuses (106) angeordnet und ausgebildet sind, um in Nuten (136, 138) der Aufnahmeeinrichtung (102) einzugreifen.

5. Gangwahlschalthebelvorrichtung (104) gemäß Anspruch 4, **dadurch gekennzeichnet, dass** das Gehäuse (106) auf einer an die Deckseite (114) anschließenden Stirnseite (118) einen Vorsprung (132) aufweist, wobei die Exzenterscheibe (122) und eine mit der Exzenterscheibe (122) gekoppelte erste Teilwelle (126) der Welle (120) auf einer ersten Seite des Vorsprungs (132) angeordnet sind, und die weitere Exzenterscheibe (122) und eine mit der weiteren Exzenterscheibe (122) gekoppelte zweite Teilwelle (128) der Welle (120) auf einer der ersten Seite gegenüberliegenden zweiten Seite des Vorsprungs (132) angeordnet sind, wobei der Exzenter-Betätigungshebel (134) den Vorsprung (132) umgreift und mit der Exzenterscheibe (122) über die erste Teilwelle (126) und mit der weiteren Exzenterscheibe (122) über die zweite Teilwelle (128) gekoppelt ist.

6. Gangwahlschalthebelvorrichtung (104) gemäß einem der vorangegangenen Ansprüche, **dadurch gekennzeichnet, dass** die Befestigungseinrichtung (108) zumindest einen Befestigungsstift (850) aufweist, wobei die Exzenterscheibe (122) ausgebildet ist, den Befestigungsstift (850) quer zur Wellenachse (130) linear zu bewegen, um ein Ende des Befestigungsstiftes (850) in eine Aussparung (852) der Aufnahmeeinrichtung (102) zu bewegen, um die Gangwahlschalthebelvorrichtung (104) mit der Aufnahmeeinrichtung (102) zu verbinden.

7. Gangwahlschalthebelvorrichtung (104) gemäß Anspruch 6, **dadurch gekennzeichnet, dass** die Befestigungseinrichtung (108) zumindest einen weiteren Befestigungsstift (854) aufweist, wobei die Exzenterscheibe (122) ausgebildet ist, den weiteren Befestigungsstift (854) quer zur Wellenachse (130) entgegengesetzt einer Bewegungsrichtung des Befestigungsstiftes (850) linear zu bewegen, um ein Ende des weiteren Befestigungsstiftes (854) in eine weitere Aussparung (856) der Aufnahmeeinrichtung (102) zu bewegen, um die Gangwahlschalthebelvorrichtung (104) mit der Aufnahmeeinrichtung (102) zu verbinden.

8. Gangwahlschalthebelvorrichtung (104) gemäß einem der vorangegangenen Ansprüche, **dadurch gekennzeichnet, dass** das Gehäuse (106) zumindest ein Rastelement (142) aufweist, welches ausgebildet ist, in ein komplementäres Rastelement (144) der Aufnahmeeinrichtung (102) einzurasten, um die Aufnahmeeinrichtung (102) mit der Gangwahlschalthebelvorrichtung (104) formschlüssig in einer im Wesentlichen senkrechten Richtung zur Deckseite (114) zu verbinden.

9. Gangwahlschalthebelvorrichtung (104) gemäß Anspruch 8, **dadurch gekennzeichnet, dass** das Rastelement (142) und die Befestigungseinrichtung (108) auf zwei gegenüberliegenden Stirnseiten (118, 140) des Gehäuses (106) angeordnet sind.

10. Gangwahlschalthebelanordnung (100) für ein Fahrzeug mit einer Gangwahlschalthebelvorrichtung (104) gemäß einem der vorangegangenen Ansprüche und der Aufnahmeeinrichtung (102), wobei der Gangwahlschalthebelvorrichtung (104) mittels der Befestigungseinrichtung (108) an der Aufnahmeeinrichtung (102) verbindbar oder verbunden ist.

11. Verfahren zum Befestigen einer Gangwahlschalthebelvorrichtung (104) für ein Fahrzeug an einer Aufnahmeeinrichtung (102) für die Gangwahlschalthebelvorrichtung (104), wobei das Verfahren die folgenden Schritte aufweist:
Bereitstellen (1010) einer mit einer Aufnahmeeinrichtung (102) verbindbaren Gangwahlschalthebelvorrichtung (104) gemäß einem der Ansprüche 1 bis 9 und Bereitstellen der Aufnahmeeinrichtung (102); und
Bewegen (1020) der Exzenterscheibe (122) der Gangwahlschalthebelvorrichtung (104) um die Wellenachse (130), um die Gangwahlschalthebelvorrichtung (104) an der Aufnahmeeinrichtung (102) zu befestigen.

12. Verfahren gemäß Anspruch 11, **dadurch gekennzeichnet, dass** im Schritt (1020) des Bewegens die Gangwahlschalthebelvorrichtung (104) kraftschlüssig und/oder formschlüssig mit der Aufnahmeeinrichtung (102) verbunden wird.

## Claims

1. Gear selector shift lever apparatus (104) for a vehicle, the gear selector shift lever apparatus (104) has the following features: a housing (106) with a top side (114) on which a shift lever (116) can be or is arranged; **characterized by** a fastening device (108) which is connected to the housing (106) and which has a shaft (120) and an eccentric disc (122) coupled to the shaft (120), wherein a central point of the eccentric disc (122) is situated outside a shaft axis (130) of the shaft (120), and wherein the fastening device (108) is designed to connect the gear selector shift lever apparatus (104) to a receiving device (102), which is connectable or connected to the vehicle, for the gear selector shift lever apparatus (104) when the eccentric disc (122) is moved about the shaft axis (130).

2. Gear selector shift lever apparatus (104) according to Claim 1, **characterized in that** the fastening device (108) has an eccentric actuation lever (134) which is coupled to the shaft (120) and which is designed to move the eccentric disc (122) about the shaft axis (130) in the event of an actuation of the eccentric actuation lever (134).

3. Gear selector shift lever apparatus (104) according to Claim 2, **characterized in that** the eccentric actuation lever (134) is designed to be pivotable between an open position, which is oriented substantially parallel to the top side (114), and a clamping closed position, which is oriented substantially transversely with respect to the top side (114), as a result of the actuation.

4. Gear selector shift lever apparatus (104) according to one of the preceding claims, **characterized in that** the fastening device (108) comprises a further eccentric disc (124) which is coupled to the shaft (120), wherein a central point of the further eccentric disc (124) is situated outside the shaft axis (130) of the shaft (120), and wherein the eccentric discs (122, 124) are arranged at mutually opposite sides of the housing (106) and are designed to engage into grooves (136, 138) of the receiving device (102).

5. Gear selector shift lever apparatus (104) according to Claim 4, **characterized in that** the housing (106) has a projection (132) on an end side (118) adjoining the top side (114), wherein the eccentric disc (122) and a first shaft part (126), which is coupled to the eccentric disc (122), of the shaft (120) are arranged on a first side of the projection (132), and the further eccentric disc (122) and a second shaft part (128), which is coupled to the further eccentric disc (122), of the shaft (120) are arranged on a second side, which is situated opposite the first side, of the projection (132), wherein the eccentric actuation lever (134) engages around the projection (132) and is coupled to the eccentric disc (122) via the first shaft part (126) and is coupled to the further eccentric disc (122) via the second shaft part (128).

6. Gear selector shift lever apparatus (104) according to one of the preceding claims, **characterized in that** the fastening device (108) has at least one fastening pin (850), wherein the eccentric disc (122) is designed to move the fastening pin (850) linearly transversely with respect to the shaft axis (130) in order to move an end of the fastening pin (850) into a recess (852) of the receiving device (102) in order to connect the gear selector shift lever apparatus (104) to the receiving device (102).

7. Gear selector shift lever apparatus (104) according to Claim 6, **characterized in that** the fastening device (108) has at least one further fastening pin (854), wherein the eccentric disc (122) is designed to move the further fastening pin (854) linearly transversely with respect to the shaft axis (130), oppositely to a movement direction of the fastening pin (850), in order to move an end of the further fastening pin (854) into a further recess (856) of the receiving device (102) in order to connect the gear selector shift lever apparatus (104) to the receiving device (102).

8. Gear selector shift lever apparatus (104) according to one of the preceding claims, **characterized in that** the housing (106) has at least one detent element (142) which is designed to engage with detent action into a complementary detent element (144) of the receiving device (102) in order to connect the receiving device (102) to the gear selector shift lever apparatus (104) in positively locking fashion in a substantially perpendicular direction with respect to the top side (114).

9. Gear selector shift lever apparatus (104) according to Claim 8, **characterized in that** the detent element (142) and the fastening device (108) are arranged on two opposite end sides (118, 140) of the housing (106).

10. Gear selector shift lever apparatus (100) for a vehicle, having a gear selector shift lever apparatus (104) according to one of the preceding claims and the receiving device (102), wherein the gear selector shift lever apparatus (104) is connectable or connected by means of the fastening device (108) to the receiving device (102).

11. Method for fastening a gear selector shift lever apparatus (104) for a vehicle to a receiving device (102) for the gear selector shift lever apparatus (104), wherein the method has the following steps:
providing (1010) a gear selector shift lever apparatus (104) according to one of Claims 1 to 9, which is connectable to a receiving device (102), and providing the receiving device (102); and
moving (1020) the eccentric disc (122) of the gear selector shift lever apparatus (104) about the shaft axis (130) in order to fasten the gear selector shift lever apparatus (104) to the receiving device (102).

12. Method according to Claim 11, **characterized in that**, in the step (1020) of moving, the gear selector shift lever apparatus (104) is connected in non-positively locking and/or positively locking fashion to the receiving device (102).

## Revendications

1. Dispositif de levier de changement de vitesse (104) pour un véhicule, dans lequel le dispositif de levier de changement de vitesse (104) présente les caractéristiques suivantes:
un boîtier (106) avec un côté de couvercle (114), sur lequel un levier de changement de vitesse (116) est ou peut être disposé,
**caractérisé par** un dispositif de fixation (108) assemblé au boîtier (106) avec un arbre (120) et un disque excentrique (122) couplé à l'arbre (120), dans lequel un point central du disque excentrique (122) est situé à l'extérieur d'un axe d'arbre (130) de l'arbre (120), et dans lequel le dispositif de fixation (108) est conçu pour assembler le dispositif de levier de changement de vitesse (104) à un dispositif de réception (102) pour le dispositif de levier de changement de vitesse (104) qui est ou peut être assemblé au véhicule, lorsque le disque excentrique (122) est déplacé autour de l'axe d'arbre (130).

2. Dispositif de levier de changement de vitesse (104) selon la revendication 1, **caractérisé en ce que** le dispositif de fixation (108) présente un levier d'actionnement d'excentrique (134) couplé à l'arbre (120), qui est conçu pour déplacer le disque excentrique (122) autour de l'axe d'arbre (130) lors d'un actionnement du levier d'actionnement d'excentrique (134).

3. Dispositif de levier de changement de vitesse (104) selon la revendication 2, **caractérisé en ce que** le levier d'actionnement d'excentrique (134) est conçu pour pouvoir pivoter, par l'actionnement, entre une position d'ouverture orientée essentiellement parallèlement au côté de couvercle (114) et une position de fermeture par serrage orientée essentiellement transversalement au côté de couvercle (114).

4. Dispositif de levier de changement de vitesse (104) selon l'une quelconque des revendications précédentes, **caractérisé en ce que** le dispositif de fixation (108) comprend un autre disque excentrique (124) couplé à l'arbre (120), dans lequel un point central de l'autre disque excentrique (124) est situé à l'extérieur de l'axe d'arbre (130) de l'arbre (120), et dans lequel les disques excentriques (122, 124) sont disposés sur des côtés opposés l'un à l'autre du boîtier (106), et sont conçus pour s'engager dans des rainures (136, 138) du dispositif de réception (102).

5. Dispositif de levier de changement de vitesse (104) selon la revendication 4, **caractérisé en ce que** le boîtier (106) présente une saillie (132) sur un côté frontal (118) se raccordant au côté de couvercle (114), dans lequel le disque excentrique (122) et un premier arbre partiel (126) de l'arbre (120) couplé au disque excentrique (122) sont disposés sur un premier côté de la saillie (132), et l'autre disque excentrique (122) et un second arbre partiel (128) de l'arbre (120) couplé à l'autre disque excentrique (122) sont disposés sur un second côté de la saillie (132) opposé au premier côté, dans lequel le levier d'actionnement d'excentrique (134) encadre la saillie (132) et est couplé au disque excentrique (122) par le premier arbre partiel (126) et à l'autre disque excentrique (122) par le second arbre partiel (128).

6. Dispositif de levier de changement de vitesse (104) selon l'une quelconque des revendications précédentes, **caractérisé en ce que** le dispositif de fixation (108) présente au moins une tige de fixation (850), dans lequel le disque excentrique (122) est conçu pour déplacer linéairement la tige de fixation (850) transversalement à l'axe d'arbre (130), afin de déplacer une extrémité de la tige de fixation (850) dans un évidement (852) du dispositif de réception (102), afin d'assembler le dispositif de levier de changement de vitesse (104) au dispositif de réception (102).

7. Dispositif de levier de changement de vitesse (104) selon la revendication 6, **caractérisé en ce que** le dispositif de fixation (108) présente au moins une autre tige de fixation (854), dans lequel le disque excentrique (122) est conçu pour déplacer linéairement l'autre tige de fixation (854) transversalement à l'axe d'arbre (130) à l'opposé d'une direction de mouvement de la tige de fixation (850), afin de déplacer une extrémité de l'autre tige de fixation (854) dans un autre évidement (856) du dispositif de réception (102), afin d'assembler le dispositif de levier de changement de vitesse (104) au dispositif de réception (102).

8. Dispositif de levier de changement de vitesse (104) selon l'une quelconque des revendications précédentes, **caractérisé en ce que** le boîtier (106) présente au moins un élément d'encliquetage (142), qui est conçu pour s'encliqueter dans un élément d'encliquetage complémentaire (144) du dispositif de réception (102), afin d'assembler le dispositif de réception (102) avec le dispositif de levier de changement de vitesse (104) par emboîtement dans une direction essentiellement perpendiculaire au côté de couvercle (114).

9. Dispositif de levier de changement de vitesse (104) selon la revendication 8, **caractérisé en ce que** l'élément d'encliquetage (142) et le dispositif de fixation (108) sont disposés sur deux côtés frontaux opposés (118, 140) du boîtier (106).

10. Agencement de levier de changement de vitesse (100) pour un véhicule avec un dispositif de levier de changement de vitesse (104) selon l'une quelconque des revendications précédentes et le dispositif de réception (102), dans lequel le dispositif de levier de changement de vitesse (104) est ou peut être assemblé au dispositif de réception (102) au moyen du dispositif de fixation (108).

11. Procédé de fixation d'un dispositif de levier de changement de vitesse (104) pour un véhicule à un dispositif de réception (102) pour le dispositif de levier de changement de vitesse (104), dans lequel le procédé présente les étapes suivantes:
préparer (1010) un dispositif de levier de changement de vitesse (104) selon l'une quelconque des revendications 1 à 9 pouvant être assemblé à un dispositif de réception (102) et préparer le dispositif de réception (102); et
déplacer (1020) le disque excentrique (122) du dispositif de levier de changement de vitesse (104) autour de l'axe d'arbre (130), afin de fixer le dispositif de levier de changement de vitesse (104) au dispositif de réception (102).

12. Procédé selon la revendication 11, **caractérisé en ce que** dans l'étape de déplacement (1020) on assemble le dispositif de levier de changement de vitesse (104) par serrage et/ou par emboîtement au dispositif de réception (102).
